# EUROPÄISCHE PATENTANMELDUNG

(11) **EP 0 691 263 A1**
(43) Veröffentlichungstag der Anmeldung: **10.01.1996**
(21) Anmeldenummer: 95108749.3
(22) Anmeldetag: 07.06.1995
(51) Int. Cl.: B62J 9/00

(54) **Einrichtung zum Befestigen von Taschen**

(30) Priorität: 04.07.1994 DE 4423373
(71) Anmelder: DEUTER SPORT UND LEDER GMBH, D-86156 Augsburg (DE)
(72) Erfinder: Franke, Michael, D-80797 München (DE)
(74) Vertreter: Haft, von Puttkamer, Berngruber, Czybulka

(57) **Zusammenfassung**

Die Erfindung betrifft eine Einrichtung zum Befestigen von Taschen oder dergleichen, insbesondere an Zweirädern, mit einem an einer Seite der Tasche befestigten Halte- oder Rahmenteil (10), das wenigstens einen an einer Stebe (40) des Zweirades einhängbaren Einhängehaken (17, 18) aufweist und wenigstens ein Riegelteil (25, 26) mit einer die Strebe (40) in einer Verriegelungsposition untergreifenden Verriegelungsnase (27', 28') besitzt. Das Riegelteil (25, 26) ist in Bezug auf das Rahmenteil (10) zwischen einem Verriegelungszustand, in dem die Verriegelungsnase (27', 28') die Strebe (40) untergreift und einem Freigabezustand, in dem die Verriegelungsnase (27', 28') aus dem Bereich der Strebe (40) gelangt ist, bewegbar. Die Bewegung des Riegelteiles (25, 26) ist zwangsweise an die Bewegung des Handgriffteiles (1) gekoppelt, derart, daß bei einer Bewegung des Handgriffteiles (1) in eine in Bezug auf das Rahmenteil (10) obere Verriegelungsposition die Verriegelungsnase (27', 28') in den Verriegelungszustand und bei einer Bewegung des Handgriffteiles (2) in eine untere Freigabeposition die Verriegelungsnase (27', 28') in den Freigabezustand gelangt.

## Beschreibung

Die Erfindung betrifft eine Einrichtung zum Befestigen von Taschen, insbesondere an Zweirädern, wie Fahrrädern, Motorrädern oder dergleichen, nach dem Oberbegriff des Patentanspruches 1.

Aus dem DE-GM 92 07 525.8 ist eine Halterung für Taschen an Fahrrädern bekannt, die wenigstens einen Befestigungsclip besitzt, der an seiner der Tasche abgewandten Seite mit einem Haltehaken über den Lenker oder eine Strebe des Fahrzeuges greift. Der Befestigungsclip besitzt einen Schnapphaken, der um eine Achse gegen die Kraft einer Feder drehbar am Befestigungsclip gelagert ist und unter Einwirkung der Federkraft den Lenker oder die Strebe von der Seite der Tasche aus von unten umgreift. Der Schnapphaken ist an seiner der Tasche zugewandten Seite mit dem Tragegriff der Tasche derart verbunden, daß durch einen Zug am Tragegriff eine Kraft auf die Feder ausgeübt wird und der Schnapphaken um die Achse bewegt wird und den Lenker oder die Strebe freigibt.

Ein Problem einer derartigen Halterung besteht darin, daß die Handhabung (Befestigen und Trennen der Halterung von der Strebe) relativ kompliziert ist, weil der Handgriff, sofern dieser zur Schaffung besserer Manipulationsmöglichkeiten bei der Handhabung der Tasche und der Halterung als starres Teil ausgebildet ist, in eine bestimmte Richtung gezogen werden muß, um den Schnapphaken gegen die Kraft der Feder zu betätigen. Zudem ist die bekannte Halterung relativ störanfällig, weil die Lebensdauer der genannten Feder begrenzt ist. Zudem ist die Montage dieser Feder relativ zeitaufwendig.

Die Aufgabe der vorliegenden Erfindung besteht daher darin, eine Einrichtung zum Befestigen von Taschen, insbesondere an Zweirädern zu schaffen, die vergleichsweise einfach handhabbar ist.

Diese Aufgabe wird durch eine Einrichtung der eingangs genannten Art gelöst, die durch die in dem kennzeichnenden Teil des Patentanspruches 1 angegebenen Merkmale gekennzeichnet ist.

Der wesentliche Vorteil der erfindungsgemäßen Einrichtung besteht darin, daß sie eine dem Schnapphaken des eingangs genannten Gebrauchsmusters vergleichbare Sperrnase aufweist, deren Bewegung zwischen der Freigabe- und Verriegelungsstellung zwangsweise an eine vertikale Bewegung des Tragegriffes gekoppelt ist. Es ist daher möglich, die Einrichtung mit der daran angeordneten Tasche am Handgriffteil zu halten, wobei dabei durch die vorgesehene Zwangssteuerung die Sperrnase automatisch in die Freigabestellung gebracht wird, und die Hakenteile an der Strebe oder dergleichen einzuhängen, ohne daß, wie beim Stand der Technik ein Druck gegen eine Feder aufgebracht werden muß. Beim Ansetzen an der Strebe und dem Nachuntendrücken des Handgriffteiles erfolgt vorteilhafterweise eine automatische Zwangsverriegelung. Beim Trennen der Einrichtung muß vorteilhafterweise lediglich das Handgriffteil ergriffen und die Einrichtung mit der Tasche in die für Taschen normale Trageposition angehoben werden, wobei die Zwangssteuerung automatisch dafür sorgt, daß die Sperrnase in die Freigabestellung gelangt. Da die genannte Zwangsführung keine Energiespeicher aufweist, ergibt sich eine relativ große Lebensdauer der erfindungsgemäßen Einrichtung und sind zudem die Herstellungskosten infolge der vereinfachten Montageoperationen vergleichsweise gering. Da der Handgriff nach dem Befestigen der Einrichtung nach unten gedrückt ist, kann die Sperrnase wegen der Zwangssteuerung vorteilhafterweise nicht unbeabsichtigt freigegeben werden.

Bei der bevorzugten Ausgestaltung ist die genannte Sperrnase von den eigentlichen Hakenteilen, mit denen die Einrichtung an der Strebe oder dergleichen eingehängt wird, getrennt.

Im folgenden werden die Erfindung und deren Ausgestaltungen im Zusammenhang mit den Figuren näher erläutert. Es zeigen:
- Fig. 1: eine Seitenansicht der erfindungsgemäßen Befestigungseinrichtung;
- Fig. 2 bis 7: verschiedene Schnitte durch die erfindungsgemäße Befestigungseinrichtung zur Funktionserläuterung und
- Fig. 8 und 9: Weiterbildungen der Erfindung.

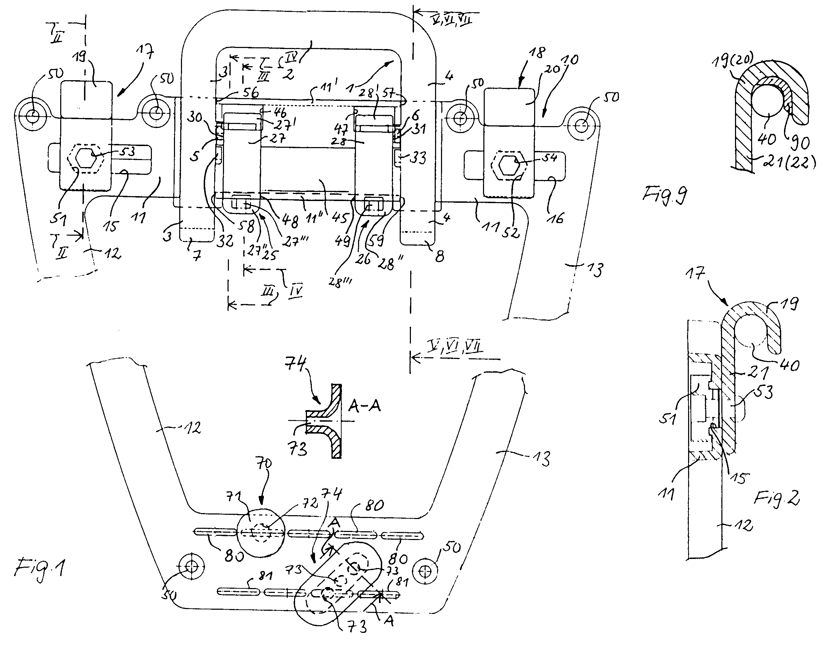

Gemäß Figur 1 umfaßt die vorliegende Befestigungseinrichtung im wesentlichen ein Halte- oder Rahmenteil 10, das an einer Seite einer Tasche befestigbar ist, wenigstens zwei Einhängehaken 17, 18, die am Rahmenteil 10 befestigt und an einem Rohr, einer Strebe 40 oder dergleichen, insbesondere eines Fahrrades einhängbar sind, ein Handgriffteil 1, das in Bezug auf das Rahmenteil 10 zwischen einer oberen Freigabeposition und einer unteren Verriegelungsposition bewegbar ist, und wenigstens ein Riegelteil 25, 26 mit einer Sperrnase 27', 28', die an die Bewegung des Handgriffteiles 1 zwangsgekoppelt zwischen einer Freigabestellung bei der Freigabeposition des Handgriffteiles 1 und einer Verriegelungsstellung bei der Verriegelungsposition des Handgriffteiles 2 bewegbar ist. Während die Einhängehaken 17, 18 die genannte Strebe 40 oberseitig übergreifen, untergreift die wenigstens eine Sperrnase 28' die Strebe 40 in der Verriegelungsstellung unterseitig, so daß das Rahmenteil 10 mit der daran befestigten Tasche sicher an der Strebe 40 festgehalten wird.

Das Rahmenteil 10 besteht vorzugsweise aus einem oberen Querteil 11, einem linken Teil 12, einem rechten Teil 13 und einem unteren Querteil 14, die im wesentlichen ein Rechteck oder ein sich vom oberen Querteil 11 aus nach unten verjüngendes Trapez oder Dreieck bilden und eine sichere Auflage für die eine Seite einer Tasche bilden. Die Tasche ist mit der Hilfe nicht näher dargestellter Befestigungseinrichtungen am Rahmenteil 10 befestigt, wobei diese Befestigungseinrichtungen vorzugsweise durch Bohrungen 50 des Rahmenteiles 10 geführt sind.

Es ist auch denkbar, anstelle der genannten Teile 11 bis 14 eine einzige, das Rahmenteil 10 bildende Platte vorzusehen, die gegebenenfalls Aussparungen zur Gewichtseinsparung aufweisen kann.

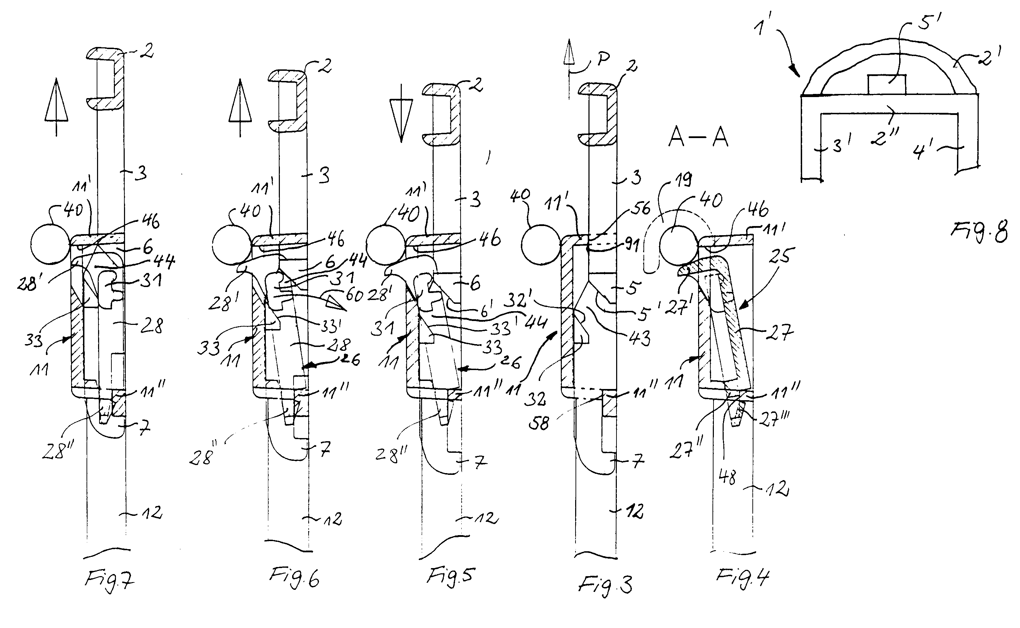

Am oberen Querteil 11 bzw. am oberen Randbereich der genannten Platte sind in der Längsrichtung des Querteiles 11 voneinander beabstandet wenigstens zwei Einhängehaken 17, 18 angeordnet, die jeweils ein oberes bogenförmig verlaufendes Hakenteil 19 bzw. 20, das sich gemäß Figur 1 ausgehend vom hinteren Schenkelteil 21 bzw. 22 zu der Tasche abgewandten Seite wölbt, um an einer Strebe 40 eingehängt werden zu können. Die Schenkelteile 21, 22 liegen an einer Seite des Querteiles 11 an und sind mit der Hilfe einer Schraube 53 bzw. 54 oder dergleichen am Querteil 11 befestigt. Vorzugsweise sind in dem Querteil 11 sich in Längsrichtung desselben erstreckende Längsaussparungen 15 bzw. 16 vorgesehen, durch die hindurch die genannte, durch eine Bohrung des Schenkelteiles 21 bzw. 22 geführte Schraube 53 bzw. 54 greift, um in einem hinter der Aussparung 15 bzw. 16 fixierten Mutterteil 51 bzw. 52 verschraubt zu werden. Auf diese Weise wird erreicht, daß die Einhängehaken 17, 18 in der Längsrichtung des Querteiles 11 verschiebbar sind. Die Figur 2 zeigt den Schnitt II-II durch den Einhängehaken 17.

Die Figur 3 zeigt in schematischer Darstellung die Führung und Ausgestaltung des linken vertikalen Teiles 3 des Handgriffes 1 im Querteil 11 des Rahmenteiles 10. Das rechte vertikale Teil 4 ist vorzugsweise in der entsprechenden Weise ausgebildet und angeordnet. Die Teile 3 bzw. 4 verlaufen senkrecht zum Querteil 11 und weisen vorzugsweise die Form von im wesentlichen länglichen Plattenteilen auf.

Das Querteil 11 besitzt vorzugsweise zumindest im Bereich des Handgriffteiles 1 den Querschnitt eines sich in Richtung zur Tasche hin öffnenden "U", wobei das Teil 3 bzw. 4 durch eine obere Führungsöffnung 56 bzw. 57 des oberen Schenkels des "U" und der untere Endbereich des Teiles 3 bzw. 4 durch eine untere Führungsöffnung 58 bzw. 59 geführt sind. Auf diese Weise wird erreicht, daß das Teil 3 bzw. 4 in vertikaler Richtung im Querteil 11 verschieblich gelagert ist. An einer Seite, vorzugsweise an der dem Teil 4 bzw. 3 zugewandten Seite, weist das Teil 3 bzw. 4 eine sich zum Teil 4 bzw. 3 hin erstreckende obere Sperrnase 5 bzw. 6 sowie eine davon nach unten beabstandete untere Sperrnase 32 bzw. 33 auf, die sich ebenfalls in Richtung auf das Teil 4 bzw. 3 erstreckt. Die Sperrnasen 5 und 32 bzw. 6 und 33 bilden zwischen sich einen Führungsschacht 43 bzw. 44, in den ein Nockenteil 30 bzw. 31 des Riegelteiles 25 bzw. 26 in der später näher erläuterten Weise eingreift. Da die Sperrnase 5 bzw. 6 eine untere schräge Fläche 5' bzw. 6' und die Sperrnase 32 bzw. 33 eine obere schräge Fläche 32' bzw. 33' aufweisen, wobei die schrägen Flächen 5' und 32' bzw. 6' und 33' jeweils von unten schräg nach oben von der der Tasche zugewandten Seite zu der der Tasche abgewandten Seite verlaufen, verläuft auch der Führungsschaft 43 bzw. 43' in dieser schrägen Richtung. Es ist erkennbar, daß das Handgriffteil 1 in der Richtung des Pfeiles P, d.h. also senkrecht zur Längserstreckung des Querteiles 11 des Rahmenteiles 10, zwischen einer unteren Position (Verriegelungsposition) gemäß Figur 3 und einer oberen Position (Freigabeposition) gemäß Figur 7 bewegbar ist. Um beim Nachobenziehen des Handgriffteiles 1 zu verhindern, daß das Handgriffteil 1 aus dem Querteil 11 herausgezogen wird, weisen die Teile 3, 4 an ihren unteren, durch die untere Führungsöffnung 58, 59 herausgeführten Enden Haltenasen 7, 8 auf, die am Querteil 11 anliegen, wenn das Handgriffteil 1 nach oben in die Freigabeposition gemäß Figur 7 gezogen ist.

Zwischen den beiden Teilen 3 und 4 des Handgriffteiles 1 befinden sich vorzugsweise zwei Riegelteile 25, 26, wobei jeweils ein Riegelteil neben einem Teil 3, 4 und zu diesem parallel verlaufend angeordnet ist. Die Riegelteile 25 und 26 können durch ein Querteil 45 miteinander verbunden sein, so daß sich die etwa die Form eines "H" ergibt. Das Querteil 45 muß jedoch nicht vorgesehen sein, so daß die beiden Riegelteile 25 und 26 auch getrennt voneinander arbeiten können.

Jedes Riegelteil 25, 26 besteht gemäß Figur 4 aus einem plattenförmigen Teil 27 bzw. 28, das an seinem oberen Ende die Verriegelungsnase 27' bzw. 28' aufweist, die durch eine Öffnung 46 bzw. 47 des Querteiles 11 in Richtung auf die der Tasche abgewandte Seite über das Querteil 11 hinausragen kann. An seinem unteren Ende ist das Teil 27 bzw. 28 am Querteil 11 derart gelagert, daß es zwischen dem in der Figur 4 dargestellten Verriegelungszustand, in dem die Verriegelungsnase 27' bzw. 28' aus der Öffnung 46 bzw. 47 hervorragt und die Strebe 40 untergreift, und dem Freigabezustand, in dem die Verriegelungsnase 27' bzw. 28' in die Öffnung 46 bzw. 47 zurückgezogen ist, verschwenkbar ist. Vorzugsweise weist das Teil 27 bzw. 28 einen unteren Endbereich 27'' bzw. 28'' auf, der gegenüber der Eberie des Teiles 27 bzw. 28 in Richtung auf die Verriegelungsnase 27' bzw. 28' versetzt ist und parallel zur Ebene des Teiles 27 bzw. 28 verläuft und durch eine untere Öffnung 48 bzw. 49 des unteren Schenkels 11' des "U" des Querteiles 11 geführt ist. Auf diese Weise ist dafür Sorge getragen, daß sich das gesamte Riegelteil 25 bzw. 26 in der unteren Öffnung 48 bzw. 49 zwischen dem Verriegelungszustand und dem Freigabezustand verschwenken kann. Auch andere Verschwenkmöglichkeiten sind denkbar. Um zu verhindern, daß das Riegelteil 25 bzw. 26 aus der unteren Öffnung 48 bzw. 49 nach oben herausfallen kann, weist der untere Endbereich 27' bzw. 28'' vorzugsweise ein Sperrglied 27''' bzw. 28''' auf, das sich aus der Ebene des Endbereiches 27''bzw. 28'' in Richtung auf die Ebene des Teiles 27 bzw. 28 herauserstreckt und den unteren Randbereich der Öffnung 48 bzw. 49 übergreift.

Das Riegelteil 25 bzw. 26 weist das oben bereits genannte Nockenteil 30 bzw. 31 auf, das an seiner dem vertikalen Teil 3 bzw. 4 des Handgriffteiles 1 zugewandten Seite des Teiles 27 bzw. 28 angeordnet ist und in den Führungsschacht 43 bzw. 44 zwischen der oberen Sperrnase 5 bzw. 6 und der unteren Sperrnase 32 bzw. 33 eingreift. Dadurch wird die Zwangsführung des Riegelteiles 25 bzw. 26 durch das Handgriffteil 1 erreicht.

Es ist gemäß Figur 8 auch denkbar, anstelle des beschriebenen starren Handgriffteiles 1 ein Handgriffteil 1' vorzusehen, das in seinem oberen Bereich eine flexible Trageschlaufe 2' besitzt und im oberen Bereich seiner vertikalen Teile 3', 4' ein Querteil 2'' aufweist, das zusammen mit den Teilen 3', 4' eine starre Einheit bildet, an die die Trageschlaufe 2' angesetzt ist. Dadurch wird erreicht, daß von der flexiblen Trageschlaufe 2' eine möglichst gleichmäßige und beidseitige Krafteinleitung in die Teile 3' und 4' erfolgt. Um eine Verschiebung der genannten Einheit 3', 4', 2'' zu ermöglichen, kann am Querteil 2'' eine Schiebetaste 5' in der Form eines Vorsprunges vorgesehen sein, die durch eine Öffnung des oberen Schenkels 11' des Querteiles 11 nach oben hindurchragt. Es kann daher dieses Handgriffteil 1' durch Ziehen am Schlaufenteil 2' in die Freigabeposition und durch Drücken an der Schiebetaste in die Verriegelungsposition gebracht werden.

Die zuvor genannte Zwangsführung wird im folgenden im Zusammenhang mit den Figuren 5 bis 7 im Zusammenhang mit dem Riegelteil 26 näher erläutert.

Die Figur 5 zeigt das Handgriffteil 1 in dem völlig nach unten geschobenen Zustand, der der Verriegelungsposition des Handgriffteiles 1 entspricht. In dieser Position greift die obere Sperrnase 6 an dem Nockenteil 31 derart an, daß die Verriegelungsnase 28' aus der Öffnung 46 in den Verriegelungsstand herausgedrückt ist und die Strebe 40 untergreift.

Wenn nun gemäß Figur 6 das Handgriffteil 1 in Pfeilrichtung nach oben gezogen wird, gelangt die untere Sperrnase 33 mit ihrer Schräge 33' an dem Nockenteil 31 zur Anlage und drückt beim weiteren Nachobenziehen das Teil 28 in Richtung zur Tasche (Pfeilrichtung 60). Dabei wird die Verriegelungsnase 28' unter der Strebe 40 weggezogen, bis sie gemäß Figur 7 dann, wenn das Handgriffteil 1 vollständig in die Freigabeposition in Pfeilrichtung nach oben gezogen ist, hinter die Öffnung 46 zurückgezogen ist und die Strebe 40 freigibt.

Wenn nun anschließend das Handgriffteil 1 nach Einhängen der Einhängehaken 17, 18 an der Strebe 40 aus der Freigabeposition der Figur 7 nach unten gedrückt wird, greift die obere Sperrnase 6 mit ihrer Schräge 6' am Nockenteil 31 an und drückt das Teil 28 zu der der Tasche abgewandten Seite, so daß die Verriegelungsnase 28' aus der Öffnung 46 herausgelangt und schließlich die Strebe 40 den in der Figur 5 dargestellten Verriegelungszustand des Riegelteiles 26 untergreift.

In der Figur 9 ist eine Weiterbildung der Erfindung beschrieben, bei der die Einhängehaken 17, 18 mit Reduzierteilen 90 versehen sind, mit deren Hilfe eine Anpassung an unterschiedliche Durchmesser von Streben 40 möglich ist. Eine Besonderheit besteht dabei darin, daß die Reduzierteile 90 lediglich an der dem Schenkelteil 21 abgewandten Innenseite des Hakenteiles 19 bzw. 20 befestigt sind. Dadurch wird erreicht, daß die Strebe 40 in Bezug auf das Querteil 11 unabhängig von ihrem Durchmesser immer in dieselbe Lage, nämlich zur Anlage an der aus der Ebene des Schenkelteiles 21 herausgeführten Innenfläche des Hakenteiles 19 bzw. 20 gelangt.

Gemäß der Figur 3 können an der der Tasche abgewandten Seite der vertikalen Teile 3 und 4 Rastvorsprünge 91 vorgesehen sein, die beim Betätigen des Handgriffes am Rand der oberen Führungsöffnung 56 bzw. 57 beim Betätigen des Handgriffes zur Anlage gelangt, so daß beim Hindurchführen des Rastvorsprunges 91 durch die Führungsöffnung 56 bzw. 57 ein wahrnehmbares Klickgeräusch erzeugt wird. Dadurch kann der Benutzer erfahren, wann der Handgriff beim Nachuntenschieben in die in der Figur 3 dargestellte Verriegelungsposition gelangt, in der die Sperrnase 27' bzw. 28' die Strebe 40 sicher verriegelnd untergreift.

Gemäß Figur 1 sind im unteren Querteil 14 des Rahmenteiles 10 vorzugsweise in zwei voneinander in vertikaler Richtung beabstandeten Reihen Langlöcher 80, 81 vorgesehen, die sich in der Längsrichtung des unteren Querteiles 14 erstrecken. In diesen Längsöffnungen 80, 81 sind pilzartige Feststelleinrichtungen 70 verschraubbar, die mit ihren von einem Mittelteil 72 nach außen ragenden Randbereich 71 eine nicht dargestellte untere schräge Haltestrebe, z.B. des Gepäckträgers, an der der Tasche abgewandten Seite übergreifen, wenn das Rahmenteil 10 an der oberen Strebe 40 befestigt ist. Durch die Wahl geeigneter Langlöcher 80, 81 und Befestigen in der richtigen Lage derselben können in Abhängigkeit vom jeweiligen Fahrradtyp die richtigen Orte für die pilzartigen Teile 70 gewählt werden. Bei der Anordnung von länglichen pilzartigen Teilen 74 mit mehreren Öffnungen 73 für das in den Langlöchern 80, 81 zu befestigende Befestigungsmittel, die in Längsrichtung des Teiles 74 angeordnet sind, ist die Anpassungsmöglichkeit an unterschiedliche Fahrradtypen noch größer, weil Schräglagen des Teiles 74 möglich sind.

## Patentansprüche

1. Einrichtung zum Befestigen von Taschen oder dergleichen, insbesondere an Zweirädern, mit einem an einer Seite der Tasche befestigten Halte- oder Rahmenteil (10), das wenigstens einen an einer Stebe (40) des Zweirades einhängbaren Einhängehaken (17, 18) aufweist und wenigstens ein Riegelteil (25, 26) mit einer die Strebe (40) in einer Verriegelungsposition untergreifenden Verriegelungsnase (27', 28') besitzt, dadurch gekennzeichnet, daß das Riegelteil (25, 26) in Bezug auf das Rahmenteil (10) zwischen einem Verriegelungszustand, in dem die Verriegelungsnase (27', 28') die Strebe (40) untergreift und einem Freigabezustand, in dem die Verriegelungsnase (27', 28') aus dem Bereich der Strebe (40) gelangt ist, bewegbar ist und daß die Bewegung des Riegelteiles (25, 26) zwangsweise an die Bewegung des Handgriffteiles (1) gekoppelt ist, derart, daß bei einer Bewegung des Handgriffteiles (1) in eine in Bezug auf das Rahmenteil (10) obere Verriegelungsposition die Verriegelungsnase (27', 28') in den Verriegelungszustand und bei einer Bewegung des Handgriffteiles (2) in eine untere Freigabeposition die Verriegelungsnase (27', 28') in den Freigabezustand gelangt.

2. Einrichtung nach Anspruch 1, dadurch gekennzeichnet, daß das Handgriffteil (1) und das Riegelteil (25, 26) in einem oberen Querteil (11) des Rahmenteiles (10) angeordnet sind.

3. Einrichtung nach Anspruch 1 oder 2, dadurch gekennzeichnet, daß das Handgriffteil (1) im wesentlichen etwa mittig am Querteil (11) angeordnet ist und daß an jeder Seite des Handgriffteiles (2) ein Einhängehaken (17, 18) am Querteil (11) vorgesehen ist.

4. Einrichtung nach Anspruch 3, dadurch gekennzeichnet, daß das Querteil (11) die Form einer Platte mit einem U-förmigen Querschnitt aufweist, der sich in Richtung auf die am Rahmenteil (10) befestigte Tasche öffnet, daß die vertikalen Teile (3, 4) des Handgriffteiles (1) durch in vertikaler Richtung deckungsgleich zueinander angeordnete Führungsöffnungen (56, 58, 57, 59) des oberen und unteren Schenkelteiles (11', 11') geführt sind, und daß wenigstens einem vertikalen Teil (3, 4) ein Riegelteil (25, 26) zugeordnet ist.

5. Einrichtung nach Anspruch 4, dadurch gekennzeichnet, daß das am Querteil (11) zwischen dem Verriegelungszustand und dem Freigabezustand bewegbare Riegelteil (25, 26) an seiner dem vertikalen Teil (3, 4) des Handgriffteiles (1) zugewandten Seite ein Nockenteil (30, 31) aufweist, das in einen Führungsschacht (43, 44) zwischen einer oberen Sperrnase (5, 6) und einer unteren Sperrnase (32, 33) eingreift, die an der dem Riegelteil (25, 26) zugewandten Seite des vertikalen Teiles (3, 4) angeordnet sind, derart, daß das Riegelteil (25, 26) bei einer Bewegung des Handgriffteiles (1) nach oben in die Freigabeposition in den Freigabezustand und bei der Bewegung des Handgriffteiles (1) nach unten in die Verriegelungsposition in den Verriegelungszustand gelangt.

6. Einrichtung nach Anspruch 5, dadurch gekennzeichnet, daß an jeder der einander zugewandten Seite der vertikalen Teile (3, 4) ein Riegelteil (25, 26) vorgesehen ist.

7. Einrichtung nach Anspruch 6, dadurch gekennzeichnet, daß die Riegelteile (25, 26) durch ein Querteil (45) miteinander verbunden sind.

8. Einrichtung nach einem der Ansprüche 1 bis 7, dadurch gekennzeichnet, daß am unteren Ende der vertikalen Teile (3, 4) Haltenasen (7, 8) vorgesehen sind, die in der Freigabeposition des Handgriffteiles (1) am unteren Schenkelteil (11'') des Querteiles (11) angreifen.

9. Einrichtung nach einem der Ansprüche 1 bis 8, dadurch gekennzeichnet, daß das Riegelteil (25, 26) mit seiner unteren Seite in eine Öffnung (48, 49) des unteren Schenkelteiles (11') des Querteiles (11) mit einem unteren Endbereich (27'', 28'') eingreift, derart, daß es zwischen dem Verriegelungszustand und dem Freigabezustand im Querteil (11) verschwenkbar ist und daß die Verriegelungsnase (27', 28') durch eine Öffnung (46, 47) des Querteiles (11) führbar ist.

10. Einrichtung nach einem der Ansprüche 5 bis 9, dadurch gekennzeichnet, daß das Nockenteil (31) beim Bewegen des Handgriffteiles (1) in die Freigabeposition mit seiner unteren Seite an einer oberen schrägen Fläche (32', 33') der unteren Sperrnase (32, 33) und bei der Bewegung des Handgriffteiles (1) in die Verriegelungsposition mit seiner oberen Seite an einer unteren schrägen Fläche (5', 6') der oberen Sperrnase (5, 6) zur Anlage gelangt, wobei die untere schräge Fläche (5', 6') der oberen Sperrnase (5, 6) und die obere schräge Fläche (32', 33') der unteren Sperrnase (32, 33) ausgehend von der der Tasche abgewandten Seite schräg nach unten zur Seite der Tasche verlaufen.

11. Einrichtung nach einem der Ansprüche 1 bis 10, dadurch gekennzeichnet, daß das vertikale Teil (3, 4) einen Rastvorsprung (91) aufweist, der beim Bewegen des Handgriffteiles (1) in die Verriegelungsposition hör- und fühlbar am Rand der Führungsöffnung (56, 57) des oberen Schenkelteiles (11') vorbeigelangt.

12. Einrichtung nach einem der Ansprüche 1 bis 11, dadurch gekennzeichnet, daß an der Innenseite der Hakenteile (19, 20) der Einhängehaken (17, 18) jeweils ein Reduzierteil (90) an der der Tasche abgewandten Seite zur Anpassung an einen Strebendurchmesser befestigbar ist, so daß eine eingesetzte Strebe (40) an der dem Schenkelteil (21, 22) zugewandten Seite des Hakenteiles (19, 20) anliegt.

13. Einrichtung nach einem der Ansprüche 1 bis 12, dadurch gekennzeichnet, daß das Handgriffteil (1') oberhalb eines die vertikalen Teile (3', 4') verbindenden Querteiles (2'') ein flexibles Schlaufenteil (2') besitzt.

14. Einrichtung nach Anspruch 13, dadurch gekennzeichnet, daß am Querteil (2'') des Handgriffteiles (1') eine Schiebetaste (5') angeformt ist, die durch eine Öffnung des oberen Schenkelteiles (11') des Querteiles (11) des Rahmenteiles (10) nach außen verläuft.

15. Einrichtung nach einem der Ansprüche 1 bis 14, dadurch gekennzeichnet, daß an einem unteren Querteil (14) des Rahmenteiles (10) in Langlöchern (80, 81) wenigstens ein pilzartiges Teil (70) so befestigbar ist, daß sein nach außen ragender Randbereich (71) beim Einhängen des Rahmenteiles (10) an der Strebe (40) in eine eine weitere Strebe übergreifende Lage gelangt.

16. Einrichtung nach Anspruch 15, dadurch gekennzeichnet, daß die pilzartige Einrichtung (70) eine runde Form besitzt.

17. Einrichtung nach Anspruch 15, dadurch gekennzeichnet, daß die pilzartige Einrichtung (74) eine längliche Form mit mehreren in Längsrichtung versetzten Öffnungen (73) zum Durchführen eines Befestigungsmittels besitzt.
